# EUROPÄISCHE PATENTSCHRIFT

(11) **EP 3 959 108 B1**
(45) Veröffentlichungstag und Bekanntmachung des Hinweises auf die Patenterteilung: **11.06.2025**
(21) Anmeldenummer: 20715001.2
(22) Anmeldetag: 25.03.2020
(51) Int. Cl.: B60S 1/38, B60S 1/40, B60S 1/52

(54) **SCHEIBENWISCHER**
WINDSCREEN WIPER
ESSUIE-GLACE

(30) Priorität: 25.04.2019 DE 102019205937
(43) Veröffentlichungstag der Anmeldung: 02.03.2022
(73) Patentinhaber: Robert Bosch GmbH, 70442 Stuttgart (DE)
(72) Erfinder: BOSNIC, Tanja, 11080 Belgrade (RS)
(86) Internationale Anmeldenummer: PCT/EP2020/058300
(87) Internationale Veröffentlichungsnummer: WO 2020/216561

(56) Entgegenhaltungen:
- EP-A1- 3 124 336
- WO-A1-2010/006775
- WO-A1-2010/034447
- DE-A1- 102010 025 688
- DE-A1- 102013 103 278
- DE-A1- 102014 017 602

## Beschreibung

### Stand der Technik

Es ist bereits ein Scheibenwischer mit zumindest einem Wischarm, mit zumindest einem am Wischarm angeordneten Fluidkanal und mit zumindest einer Verbindungseinheit vorgeschlagen worden, wobei die Verbindungseinheit zumindest ein Verbindungselement zur fluidtechnischen Verbindung des Fluidkanals mit einem Wischblatt aufweist. DE-A-102010025688 offenbart einen gattungsgemäßen Scheibenwischer.

### Offenbarung der Erfindung

Die Erfindung geht aus von einem Scheibenwischer mit zumindest einem Wischarm, welcher zumindest eine Fluidanschlusseinheit aufweist, mit einem Wischblatt, welches zumindest einen Wischblattadapter zu einer Kopplung mit dem Wischarm aufweist und welches entfernbar ausgestaltet ist, und mit zumindest einer Verbindungseinheit, welche zumindest einen Fluidkanal zu einem Fluiddurchfluss aufweist.

Es wird vorgeschlagen, dass die Verbindungseinheit zumindest einen Verbindungsblock aufweist, der zu einer fluidtechnischen Verbindung der Fluidanschlusseinheit und dem Wischblattadapter vorgesehen ist.

Der Scheibenwischer ist vorzugsweise zu einem Einsatz an einem Fahrzeug,

insbesondere einem Kraftfahrzeug, vorgesehen. Der Scheibenwischer ist insbesondere zu einer Reinigung einer Scheibe, insbesondere einer Front- und/oder Heckscheibe, eines Fahrzeugs vorgesehen ist. Vorzugsweise weist der Scheibenwischer, insbesondere zu der Reinigung der Scheibe zumindest ein Fluidsystem auf. Insbesondere weist das Fluidsystem zumindest eine Fluideinheit auf,

welche vorzugsweise zu einem Fluidtransport vorgesehen ist. Vorzugsweise weist das Fluidsystem zumindest einen Fluidaufnahmebehälter auf, welcher zu einer Fluidbereitstellung vorgesehen ist. Insbesondere ist das Fluidsystem dazu vorgesehen, ein Fluid von dem Fluidaufnahmebehälter über die Fluideinheit auf eine Front- und/oder Heckscheibe des Fahrzeugs zu transportieren. Insbesondere weist das Wischblatt zumindest eine Fluidausgabeeinheit auf, welche vorzugsweise dazu vorgesehen ist, zu einer Reinigung der Scheibe ein Fluid auf die Scheibe auszugeben, insbesondere zu sprühen. Vorzugsweise ist ein Fluid als ein Wischwasser ausgebildet. Das Wischblatt, insbesondere eine Wischlippe des Wischblatts, ist vorzugsweise dazu vorgesehen, zu einer Reinigung der Scheibe über die Scheibe zu wischen. Insbesondere ist das Wischblatt dazu vorgesehen, auf der Scheibe befindlichen Schmutz und/oder ein durch die Fluidausgabeeinheit auf die Scheibe ausgegebenes Fluid von der Scheibe wegzuwischen. Vorzugsweise ist der Wischarm dazu vorgesehen, das, insbesondere durch den Wischblattadapter an dem Wischarm befestigte, Wischblatt zu einer Reinigung der Scheibe über die Scheibe zu bewegen.

Vorzugsweise bilden die Fluidanschlusseinheit und/oder die Fluidausgabeeinheit zumindest teilweise die Fluideinheit. Insbesondere ist die Fluidausgabeeinheit und/oder die Fluidanschlusseinheit eine kanalartige Ausnehmung in dem Wischarm und/oder Wischblatt. Alternativ sind/ist die Fluidausgabeeinheit und/oder die Fluidanschlusseinheit zumindest teilweise als Rohr und/oder Schlauch, besonders bevorzugt als ein elastischer Schlauch, ausgebildet. Es ist vorstellbar, dass die Fluidausgabeeinheit und/oder die Fluidanschlusseinheit von einer Halterungen an dem Wischarm und/oder Wischblatt gehalten sind/ist. Vorzugsweise ist der Wischarm an zumindest einer Antriebswelle eines Wischerantriebs des Scheibenwischers des Fahrzeugs angeordnet. Insbesondere ist der Wischarm von dem Wischerantrieb zu einer Bewegung relativ zu der Scheibe antreibbar. Vorzugsweise ist der Wischarm zumindest teilweise aus einem Metall ausgebildet. Alternativ oder zusätzlich ist vorstellbar, dass der Wischarm zumindest teilweise aus einem Kunststoff, aus einem Verbundwerkstoff oder aus einem anderen, einem Fachmann als sinnvoll erscheinendem Material ausgebildet ist. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Bevorzugt soll unter einem "Fluidkanal" ein kanalartiges Element und/oder Ausnehmung zur Führung eines Fluids verstanden werden. Vorzugsweise weist der Fluidkanal einen zumindest im Wesentlichen kreisförmigen Querschnitt auf. Alternativ ist denkbar, dass der Fluidkanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Insbesondere bildet der Fluidkanal zumindest innerhalb der Verbindungseinheit lediglich eine Durchflusslinie, wobei vorzugsweise die Verbindungseinheit lediglich zwei Kanalöffnungen aufweist. Insbesondere ist der Fluidkanal zumindest innerhalb der Verbindungseinheit unverzweigt.

Unter einem "Wischblattadapter" soll in diesem Zusammenhang insbesondere ein Adapter verstanden werden, der einen Kontaktbereich zu einem Wischblattelement des Wischblatts aufweist und insbesondere mit dem Wischblattelement unlösbar verbunden ist und insbesondere zumindest ein Kopplungselement aufweist, dass dazu vorgesehen ist, eine Kopplung und/oder Kontaktierung mit dem Wischarm, insbesondere einem korrespondierenden Kopplungselement des Wischarms, bereitzustellen. Insbesondere ist die Kopplung zwischen dem Wischblattadapter und dem Wischarm, insbesondere zwischen dem Kopplungselement des Wischblattadapters und dem korrespondierende Kopplungselement des Wischarms, lösbar.

Bevorzugt ist die Verbindungseinheit dazu vorgesehen, die Fluidanschlusseinheit mit der Fluidausgabeeinheit, insbesondere fluidtechnisch, zu verbinden. Vorzugsweise ist die Verbindungseinheit in zumindest einem montierten Zustand mit dem Wischblattadapter und/oder dem Wischarm, insbesondere der Fluidanschlusseinheit des Wischblattadapters, kraft- und/oder formschlüssigen verbunden. Insbesondere ist die Verbindungseinheit verschieden von dem Kopplungselement des Wischblattadapters ausgebildet. Vorzugsweise ist lediglich die Verbindungseinheit dazu vorgesehen, den Wischarm mit dem Wischblatt, fluidtechnisch zu verbinden.

Unter einem "Verbindungsblock" soll insbesondere ein Element der Verbindungseinheit verstanden werden, dessen Querschnitt senkrecht zu einer Haupterstreckungsrichtung des Verbindungsblocks wesentlich größer ist als ein Querschnitt des Fluidkanals, insbesondere in dem Verbindungsblock, senkrecht zu einer Haupterstreckungsrichtung des Fluidkanals, wobei vorzugsweise ein Flächeninhalt des Querschnitts des Verbindungsblocks insbesondere zumindest 1,5 mal, vorteilhaft wenigstens 2 mal, vorzugsweise zumindest 3 mal und besonders vorteilhaft wenigstens 4 mal größer ist, als ein Flächeninhalt des Querschnitts des Fluidkanals. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt.

Durch die erfindungsgemäße Ausgestaltung der Wischarmvorrichtung kann vorteilhaft eine einfache Verbindung zwischen der Fluidanschlusseinheit und dem Wischblatt, insbesondere dem Wischblattadapter, hergestellt werden. Ferner kann vorteilhaft eine Verbindungseinheit bereitgestellt werden, die bei einem Wechsel des Wischarms einfach entnommen und mit dem neuen Wischarm verbunden werden kann. Zudem kann vorteilhaft eine Verbindungseinheit bereitgestellt werden, die mit der Hand lösbar und/oder koppelbar ausgestaltet ist. Weiterhin kann vorteilhaft ein Verbindungsbereich, insbesondere zwischen der Fluidanschlusseinheit und der Verbindungseinheit und/oder zwischen der Verbindungseinheit und dem Wischblattadapter vorteilhaft vor äußeren Einflüssen geschützt werden. Es kann vorteilhaft eine Verletzungsgefahr für einen Bediener bei einem Anschließen und/oder einem Trennen der Verbindungseinheit verringert werden. Ferner können vorteilhaft Fehler bei einem Anschließen der Verbindungseinheit und/oder des Fluidkanals der Verbindungseinheit an die Fluidanschlusseinheit und/oder dem Wischarm vermieden werden, wodurch insbesondere ein Austreten des Fluids und dadurch resultierende Schäden vermieden werden können. Ferner kann vorteilhaft eine Ästhetik des Scheibenwischers verbessert werden, da der Wischblattadapter sowohl für eine mechanische Kopplung als auch für eine fluidtechnische Kopplung mit dem Wischarm vorgesehen ist.

Nach der Erfindung wird vorgeschlagen, dass der Fluidkanal innerhalb des Verbindungsblocks eine Richtungsabweichung aufweist. Unter einer "Richtungsabweichung" soll insbesondere verstanden werden, dass eine Durchflussrichtung in dem Verbindungselement sich entlang der Richtungsabweichung, insbesondere im Bezug zu einer Haupterstreckungsebene des Verbindungselements, verändert. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Insbesondere weist die Richtungsabweichung zumindest eine Winkeländerung, vorzugsweise relativ zu der Haupterstreckungsebene des Verbindungsblocks, insbesondere zwischen 10° und 170°, vorteilhaft zwischen 30° und 150°, vorzugsweise zwischen 50° und 130°, besonders vorteilhaft zwischen 70° und 110° und besonders bevorzugt zwischen 80° und 100°. Besonders bevorzugt weist die Richtungsabweisung zumindest eine Winkeländerung von zumindest im Wesentlichen 90° auf. Vorzugsweise weist der Fluidkanal, insbesondere entlang der Richtungsabweichung, innerhalb des Verbindungsblocks eine Krümmung und/oder Ecke auf. Unter einer "Ecke" soll insbesondere eine Krümmung mit einem Radius zumindest Näherungsweise 0 mm verstanden werden. Hierdurch kann vorteilhaft eine einfache Richtungsänderung innerhalb der Verbindungseinheit bereitgestellt werden. Ferner kann vorteilhaft ein Bedienkomfort, insbesondere bei einem Wechsel des Wischblatts, erhöht werden, da vorteilhaft bei einem Verbinden des Verbindungsblocks mit dem Wischblattadapter und/oder der Fluidausgabeeinheit ein Verbiegen des Verbindungsblocks zumindest im Wesentlichen entfällt.

Nach der Erfindung wird vorgeschlagen, dass der Verbindungsblock zu einer festen und/oder fluiddichten Steckverbindung mit einem Steckventil des Wischblattadapters vorgesehen ist. Vorzugsweise weist der Verbindungsblock zumindest eine Ausnehmung auf, die zu der Steckverbindung mit dem Steckventil des Wischblattadapters vorgesehen ist. Vorzugsweise ist eine Erstreckungsgerade der Ausnehmung des Verbindungsblocks zumindest im Wesentlichen parallel, insbesondere deckungsgleich, zu einer zu einer Durchflussrichtung innerhalb des Steckventils. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere bildet das Steckventil des Wischblattadapters zumindest teilweise die Fluidausgabeeinheit. Unter einer "Erstreckungsgeraden" eines Objekts soll insbesondere eine Gerade verstanden werden, welche parallel zu einer längsten Kante eines kleinsten geometrischen Quaders verläuft, welcher das Objekt gerade noch vollständig umschließt. Insbesondere ist die Ausnehmung einteilig mit dem Fluidkanal der Verbindungseinheit verbunden. Vorzugweise ist das Steckventil des Wischblattadapters zumindest im Wesentlichen zylinderförmig. Es sind jedoch auch alternative Ventile vorstellbar, welche insbesondere eine Schraubverbindung, eine Rastverbindung, eine Magnetverbindung und/oder dergleichen, bereitstellen. Hierdurch kann vorteilhaft eine Flexibilität erhöht werden, da mittels des Steckventils bei einem Wechsel des Wischblatts eine schnelle und einfache Verbindung bereitgestellt wird. Ferner kann vorteilhaft ein Bedienkomfort, insbesondere bei einem Wechsel des Wischblatts, vorteilhaft erhöht werden, insbesondere da die häufig unzugänglich angeordnete Verbindungseinheit einfach entfernt und wieder verbunden werden kann. Ferner kann vorteilhaft eine möglichst einfache Konstruktion zu einer fluiddichten Verbindung zwischen der Verbindungseinheit und dem Wischblattadapter bereitgestellt werden.

Weiterhin wird vorgeschlagen, dass der Verbindungsblock zumindest im Wesentlichen polyederförmig ausgebildet ist. Unter einem "polyederförmiges" Objekt soll insbesondere ein Objekt verstanden werden, welches zumindest im Wesentlichen ausschließlich von geraden Flächen begrenzt wird, wobei das Objekt zumindest eine Flächenanzahl von insbesondere zwischen 12 und 4, vorteilhaft zwischen 5 und 10 und besonders vorteilhaft zwischen 6 und 8 aufweist. Vorzugsweise ist der Verbindungsblock zumindest im Wesentlichen quaderförmig ausgebildet. Hierdurch kann vorteilhaft ein Bedienkomfort erhöht werden, da eine Greifbarkeit des Verbindungsblocks optimiert ist. Ferner können vorteilhaft mit einem polyederförmigen Verbindungsblock Fertigungskosten und Fertigungsaufwand gesenkt werden.

Ferner wird vorgeschlagen, dass ein Winkel zwischen der Haupterstreckungsgeraden des Verbindungsblocks und einer Haupterstreckungsebene des Wischblattadapters zumindest bei einer Bewegung des Wischblatts zumindest im Wesentlichen konstant bleibt. Vorzugsweise ist der Winkel zwischen der Haupterstreckungsebene des Verbindungsblocks und der Haupterstreckungsebene des Wischarms zumindest im Wesentlichen parallel. Insbesondere bewegt sich der Verbindungsblock bei einer Bewegung des Wischarms, insbesondere des Wischblattadapters, zumindest im Wesentlichen synchron mit. Vorzugsweise ist zumindest eine Fläche des Verbindungsblocks zumindest im Wesentlichen vollständig in Kontakt mit einer Fläche des Wischblattadapters. Hierdurch kann vorteilhaft eine fluiddichte Verbindung zwischen der Verbindungseinheit, insbesondere dem Verbindungsblock, und dem Wischblattadapter sichergestellt werden. Ferner kann vorteilhaft ein konstanter Fluiddurchfluss bereitgestellt werden.

Zudem wird vorgeschlagen, dass der Verbindungsblock zumindest im Wesentlichen einteilig ausgebildet ist. Unter "einteilig" soll insbesondere in einem Stück geformt verstanden werden, Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Hierdurch kann vorteilhaft eine Formstabilität des Verbindungsblocks erhöht werden. Ferner kann vorteilhaft eine Fertigung der Verbindungseinheit, insbesondere des Verbindungsblocks, weiter vereinfacht werden.

Weiterhin wird vorgeschlagen, dass die Verbindungseinheit zumindest teilweise rotationsschlaff und/oder biegeschlaff ist. Vorzugsweise ist die Verbindungseinheit lediglich zu einer fluidtechnischen Verbindung zwischen der Fluidanschlusseinheit und dem Wischblattadapter vorgesehen. Nach der Erfindung ist die Verbindungseinheit zumindest teilweise, vorzugsweise vollständig, aus einem elastischen Material. Bevorzugt ist eine krafttechnische Kopplung, insbesondere zwischen dem Kopplungselement des Wischblattadapters und dem Kopplungselement von dem Wischarm zumindest im Wesentlichen getrennt von der fluidtechnischen Verbindung ausgebildet. Hierdurch kann vorteilhaft eine Flexibilität der Verbindungseinheit erhöht werden, da diese unabhängig von einer mechanischen Kopplung ist. Ferner kann vorteilhaft eine fluiddichte Verbindung weiter verbessert werden.

Nach der Erfindung wird vorgeschlagen, dass die Verbindungseinheit zumindest ein schlauchförmiges Leitungselement aufweist, das den Fluidkanal zumindest teilweise aufweist und welches zu einer fluidtechnischen Verbindung mit der Fluidanschlusseinheit vorgesehen ist. Unter "schlauchförmig" soll insbesondere verstanden werden, dass ein Element eine Haupterstreckung aufweist, die wesentlich grö-βer, insbesondere zumindest ein 2-faches, vorteilhaft wenigstens ein 3-faches, vorzugsweise zumindest ein 4-faches, und besonders vorteilhaft wenigstens ein 5-faches, als eine zu der Haupterstreckung senkrechte Erstreckung ist. Unter einer "Haupterstreckung" soll insbesondere eine Erstreckung entlang der Haupterstreckungsrichtung verstanden werden, welche durch die äußeren Kanten des Objekts begrenzt werden. Insbesondere entspricht die Form des Leitungselements zumindest im Wesentlichen der Form des Fluidkanals. Insbesondere ist das Leitungselement zumindest im Wesentlichen zylinderförmig. Vorzugsweise bildet das Leitungselement lediglich eine Wandung für den Fluidkanal. Insbesondere weist die Fluidanschlusseinheit zu einer Steckverbindung mit der Leitungselement zumindest ein Steckventil auf. Hierdurch kann vorteilhaft eine fluiddichte Verbindung bei einer Bewegung des Wischarms und/oder Wischblatts sichergestellt werden.

Zudem wird vorgeschlagen, dass die Verbindungseinheit zumindest einen weiteren Fluidkanal zu einem Fluiddurchfluss aufweist. Der Fluidführung in dem weiteren Fluidkanal ist zumindest im Wesentlichen gemäß einer Fluidführung in dem Fluidkanal. Hierdurch kann vorteilhaft eine Fluidzufuhr bei einem Wischvorgang des Scheibenwischers weiter optimiert werden. Ferner kann vorteilhaft eine Fluidzufuhr bei einer Hin- und Rückbewegung sichergestellt werden.

Weiterhin wird vorgeschlagen, dass die Verbindungseinheit zumindest ein weiteres Leitungselement aufweist, das den weiteren Fluidkanal zumindest teilweise aufweist und welches zu einer fluidtechnischen Verbindung mit der Fluidanschlusseinheit vorgesehen ist. Insbesondere ist das Leitungselement zumindest im Wesentlichen baugleich zu dem weiteren Leitungselement. Vorzugsweise ist das weitere Leitungselement einteilig mit dem Verbindungsblock verbunden. Hierdurch kann vorteilhaft Fluidzufuhr weiter vereinfacht werden. Ferner kann vorteilhaft eine Fluidzufuhr bei einer Hin- und Rückbewegung weiter optimiert werden.

Ferner wird vorgeschlagen, dass der Verbindungsblock zumindest teilweise den weiteren Fluidkanal aufweist. Vorzugsweise weist der Verbindungsblock zumindest den Fluidkanal und den weiteren Fluidkanal auf. Insbesondere weist der Verbindungsblock zumindest eine weitere Ausnehmung auf, die zu einer Steckverbindung mit einem weiteren Steckventil der Fluidanschlusseinheit vorgesehen ist. Hierdurch kann vorteilhaft ein Fertigungsaufwand weiter reduziert werden. Ferner kann vorteilhaft ein Bedienerkomfort weiter erhöht werden, da lediglich ein Verbindungsblock für zwei Steckverbindungen mit dem Wischblattadapter vorgesehen ist.

Des Weiteren wird eine Verbindungseinheit für einen Scheibenwischer vorgeschlagen. Die Verbindungseinheit weist, vorzugsweise zu einem Fluidtransport, zumindest einen Verbindungsblock und/oder ein Leitungselement auf, wobei vorzugsweise der Verbindungsblock und/oder das Leitungselement zumindest eine Schnittstelle zu einer Kopplung mit einem Wischarm und/oder einem Wischblatt, insbesondere einem Wischblattadapter eines Wischblatts, aufweist. Insbesondere ist die Verbindungseinheit einteilig ausgebildet. Hierdurch kann vorteilhaft einen Verbindungseinheit zu einem Fluidtransport bereitgestellt werden, die zumindest im Wesentlichen unabhängig von einem Wischarm und/oder Wischblatt ausgebildet und/oder einsetzbar ist. Vorteilhaft kann eine Verbindungseinheit bereitgestellt werden, die bei einem Wechsel des Wischblatts oder eines Scheibenwischers wiederverwendet werden kann.

Ferner wird ein Wischblatt für einen Scheibenwischer vorgeschlagen. Vorzugsweise weist das Wischblatt, insbesondere ein Wischblattadapter des Wischblatts, zumindest eine Schnittstelle zu einer Kopplung mit einem Verbindungsblock, bevorzugt zu einer fluidtechnischen Verbindung, auf. Die Schnittstelle ist dazu vorgesehen, einen Fluidanschluss für eine Fluidausgabeeinheit des Wischblatts bereitzustellen. Insbesondere ist die Schnittstelle zur Kopplung mit dem Verbindungsblock als Steckventil ausgebildet. Hierdurch kann vorteilhaft ein Wischblatt, insbesondere mit einer Fluidausgabeeinheit, bereitgestellt werden, welches schnell und einfach mit einem Wischarm und/oder einer Fluidanschlusseinheit verbunden werden kann.

Zudem wird ein Verfahren zu einer Montage zumindest eines Scheibenwischers vorgeschlagen. Vorzugsweise ist das Verfahren dazu vorgesehen, das Wischblatt des Scheibenwischers zu tauschen. Insbesondere wird in zumindest einem ersten Verfahrensschritt eine fluidtechnische Verbindung gelöst. Vorzugsweise wird in dem ersten Verfahrensschritt zumindest eine Steckverbindung zwischen dem Steckventil des Wischblattadapters und der Ausnehmung des Verbindungsblocks gelöst. Vorzugsweise wird in dem ersten Verfahrensschritt zumindest eine Steckverbindung zwischen dem Leitungselement und dem Steckventil der Fluidanschlusseinheit gelöst. Vorzugsweise wird in zumindest einem zweiten Verfahrensschritt zumindest eine krafttechnische Verbindung zwischen dem Wischblattadapter und dem Wischarm gelöst. Hierdurch kann vorteilhaft ein Verfahren bereitgestellt werde, welches eine einfache und schnelle Montage und/oder Demontage des Wischblatts ermöglicht. Ferner kann vorteilhaft ein hoher Bedienkomfort bei einer Montage und/oder Demontage des Wischblatts ermöglicht werden.

Der erfindungsgemäße Scheibenwischer, und/oder das erfindungsgemäße Verfahren sollen/soll hierbei nicht auf die oben beschriebene Anwendung und Ausführungsform beschränkt sein. Insbesondere können/kann der erfindungsgemäße Scheibenwischer, und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Ein Teil eines erfindungsgemäßen Scheibenwischers, mit einem Wischblatt und mit einer Verbindungseinheit, welche zumindest den Wischarm mit dem Wischblatt fluidtechnisch verbindet,
- Fig. 2: Einen Teil des Scheibenwischers in einer Draufsicht,
- Fig. 3: ein Wischblattadapter des Wischblatts und die Verbindungseinheit, welche mit dem Wischblattadapter verbunden ist,
- Fig. 4: den Wischblattadapter und zumindest teilweise die Verbindungseinheit, wobei die Verbindungseinheit in einer Schnittansicht dargestellt ist,
- Fig. 5: die Verbindungseinheit mit einem Verbindungsblock und mit einem Leitungselement,
- Fig. 6: die Verbindungseinheit mit dem Verbindungsblock und dem Leitungselement in einer Draufsicht,
- Fig. 7: ein Teil des Scheibenwischers mit dem Wischarm und dem Wischblatt in einem demontierten Zustand.

### Beschreibung des Ausführungsbeispiels

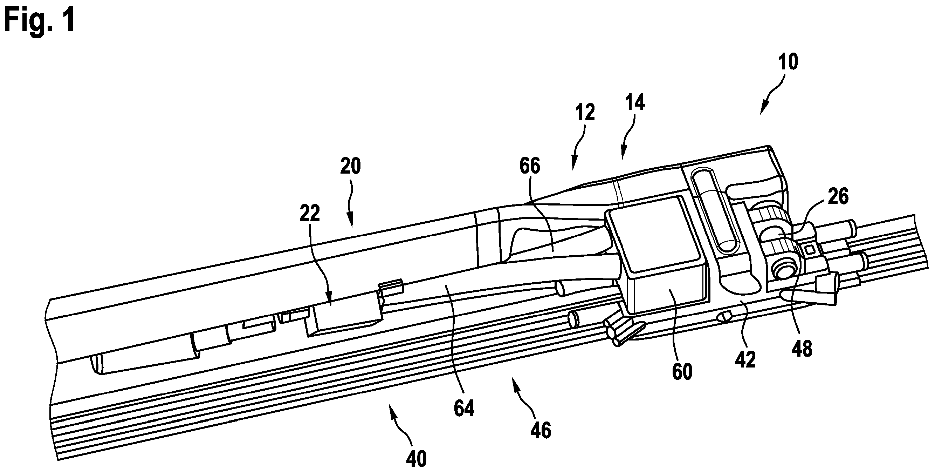

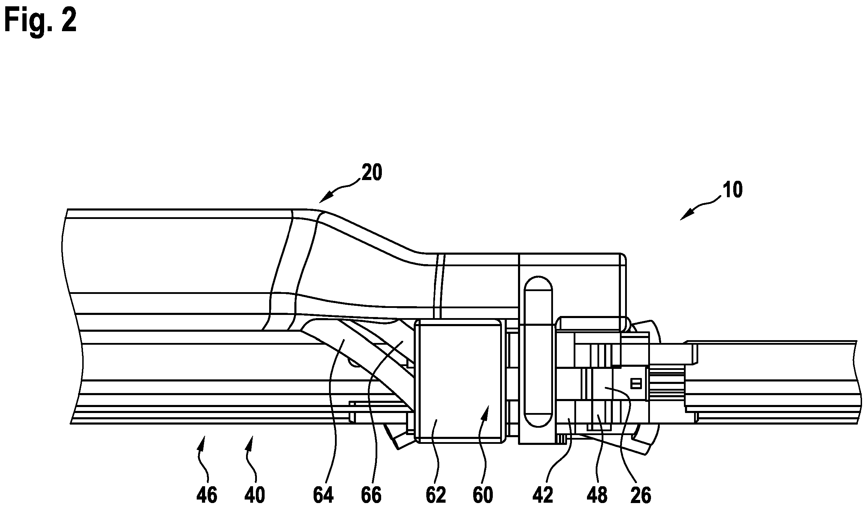

Die Figur 1 zeigt einen Teil eines Scheibenwischers 10 in einem montierten Zustand. Die Figur 2 zeigt den Teil des Scheibenwischers 10 in einer Draufsicht. Der Scheibenwischer 10 ist zu einem Einsatz an einem Kraftfahrzeug vorgesehen. Der Scheibenwischer 10 ist zu einer Reinigung einer Front- und/oder Heckscheibe des Fahrzeugs vorgesehen. Der Scheibenwischer 10 weist zumindest ein Fluidsystem 12 auf. Das Fluidsystem 12 ist zu einem Fluidtransport vorgesehen. Das Fluidsystem 12 weist zumindest einen Fluideinheit 14 auf. Das Fluidsystem 12 weist zumindest einen Fluidaufnahmebehälter auf. Das Fluidsystem 12 ist dazu vorgesehen, ein Fluid von dem Fluidaufnahmebehälter über die Fluideinheit 14 auf eine Front- und/oder Heckscheibe des Fahrzeugs zu transportieren. Das Fluid ist als ein Wischwasser ausgebildet.

Der Scheibenwischer 10 weist zumindest einen Wischarm 20 auf. Der Wischarm 20 ist an zumindest einer Antriebswelle eines Wischerantriebs des Scheibenwischers 10 des Fahrzeugs angeordnet. Der Wischarm 20 ist von dem Wischerantrieb zu einer Bewegung relativ zu der Scheibe antreibbar. Der Wischarm 20 ist zumindest teilweise aus einem Metall ausgebildet. Alternativ oder zusätzlich ist der Wischarm 20 zumindest teilweise aus einem Kunststoff, aus einem Verbundwerkstoff oder dergleichen ausgebildet ist. Der Wischarm 20 weist zumindest eine Fluidanschlusseinheit 22 auf. Die Fluidanschlusseinheit 22 bildet zumindest teilweise die Fluideinheit 14 zu dem Transport des Fluids. Die Fluidanschlusseinheit 22 weist zumindest eine kanalartige Ausnehmung 74 zu einem Fluiddurchfluss auf. Die Fluidanschlusseinheit 22 ist mit einer Halterung an dem Wischarm 20 befestigt.

Der Scheibenwischer 10 weist zumindest ein Wischblatt 40 auf. Die Fluidanschlusseinheit 22 ist zu einer Verbindung des Fluidaufnahmebehälters des Fahrzeugs mit dem Wischblatt 40 vorgesehen. Das Wischblatt 40 weist zumindest eine Fluidausgabeeinheit 46 auf. Die Fluidausgabeeinheit 46 bildet zumindest teilweise die Fluideinheit 14 zu dem Transport des Fluids. Die Fluidausgabeeinheit 46 ist dazu vorgesehen, zu einer Reinigung der Scheibe das Fluid auf die Scheibe auszugeben und/oder zu sprühen. Die Fluidausgabeeinheit 46 weist zumindest eine kanalartige Ausnehmung 74 zu einem Fluiddurchfluss auf. Das Wischblatt 40 ist dazu vorgesehen, zu einer Reinigung der Scheibe über die Scheibe zu wischen. Das Wischblatt 40 ist dazu vorgesehen, das durch die Fluidausgabeeinheit 46 auf die Scheibe ausgegebene Fluid von der Scheibe wegzuwischen. Das Wischblatt 40 weist zumindest einen Wischblattadapter 42 auf. Der Wischblattadapter 42 ist zu einer Kopplung mit dem Wischarm 20 vorgesehen. Der Wischblattadapter 42 weist zumindest einen Kontaktbereich zu einem Wischblattelement des Wischblatts 40 auf. Der Wischblattadapter 42 ist mit dem Wischblattelement unlösbar verbunden. Der Wischblattadapter 42 weist zumindest ein Kopplungselement 48 auf, das dazu vorgesehen ist, eine Kopplung und/oder Kontaktierung des Wischblatts 40 mit dem Wischarm 20 bereitzustellen. Der Wischarm 20 weist zumindest ein korrespondierendes Kopplungselement 26 auf, das zu einer Kopplung mit dem Kopplungselement 48 des Wischblattadapters 42 vorgesehen ist. Das Kopplungselement 48 des Wischblattadapters 42 und das Kopplungselement 26 des Wischarms 20 sind zu einer Kraftübertragung zwischen dem Wischarm 20 und dem Wischblatt 40 vorgesehen. Das Kopplungselement 48 des Wischblattadapters 42 und das korrespondierende Kopplungselement 26 des Wischarms 20 sind zueinander zumindest teilweise schwenkbar angeordnet. Das Kopplungselement 48 des Wischblattadapters 42 und das korrespondierende Kopplungselement 26 des Wischarms 20 sind zu einer Kraftübertragung zwischen dem Wischarm 20 und dem Wischblatt 40 vorgesehen. Der Wischarm 20 ist dazu vorgesehen, das durch den Wischblattadapter 42 an dem Wischarm 20 befestigte, Wischblatt 40 zu einer Reinigung der Scheibe über die Scheibe zu bewegen. Das Wischblatt 40 ist entfernbar ausgestaltet. Die Kopplung zwischen dem Kopplungselement 48 des Wischblattadapters 42 und dem korrespondierende Kopplungselement 26 des Wischarms 20 ist lösbar.

Der Scheibenwischer 10 weist zumindest eine Verbindungseinheit 60 auf. Die Verbindungseinheit 60 ist dazu vorgesehen, den Wischarm 20 mit dem Wischblattadapter 42 fluidtechnisch zu Verbinden. Die Verbindungseinheit 60 verbindet zumindest die Fluidanschlusseinheit 22 mit der Fluidausgabeeinheit 46. Die Verbindungseinheit 60 ist mit dem Wischblattadapter 42 zu einem Fluiddurchfluss verbunden. Die Verbindungseinheit 60 ist lediglich zu einer fluidtechnischen Verbindung zwischen der Fluidanschlusseinheit 22 und dem Wischblattadapter 42 vorgesehen. Die Verbindungseinheit 60 ist zumindest teilweise rotationsschlaff und/oder biegeschlaff. Die Verbindungseinheit 60 ist zumindest teilweise aus einem elastischen Material. Die Verbindungseinheit 60 ist zumindest im Wesentlichen getrennt von dem Kopplungselement 48 des Wischblattadapters 42 und dem korrespondierenden Kopplungselement 26 des Wischarms 20 ausgebildet.

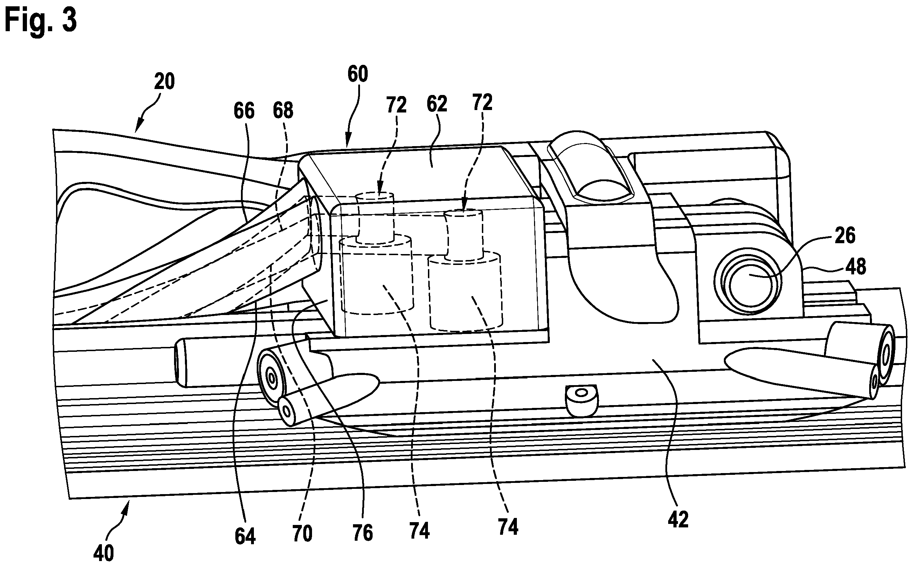

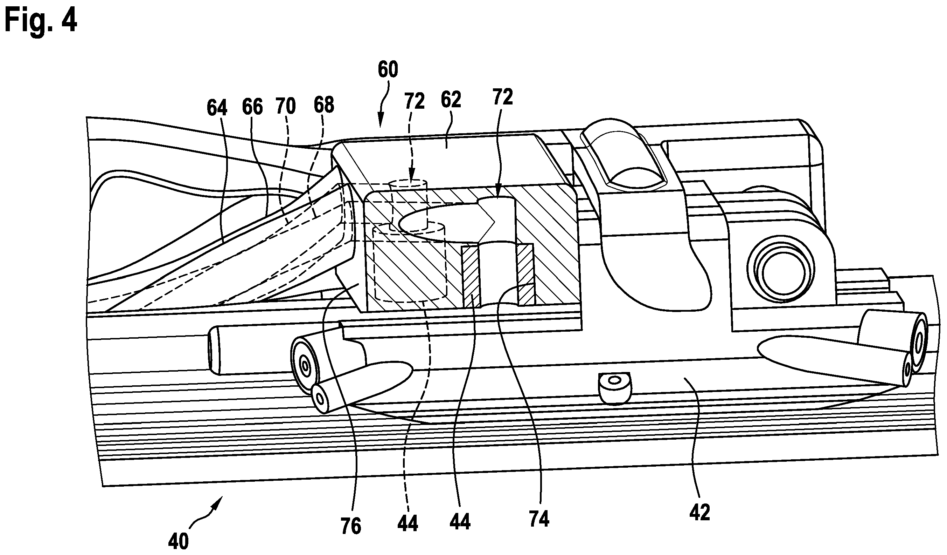

Die Figur 3 zeigt den Wischblattadapter 42 und zumindest teilweise die Verbindungseinheit 60. Die Figur 4 zeigt den Wischblattadapter 42 und zumindest teilweise die Verbindungseinheit 60, wobei die Verbindungseinheit 60 in einer Schnittansicht dargestellt ist.

Die Verbindungseinheit 60 weist zumindest einen Fluidkanal 68 zu einem Fluiddurchfluss auf. Der Fluidkanal 68 bildet zumindest teilweise die Fluideinheit 14 zu dem Transport des Fluids. Der Fluidkanal 68 weist einen zumindest im Wesentlichen kreisförmigen Querschnitt auf. Der Fluidkanal 68 bildet zumindest innerhalb der Verbindungseinheit 60 lediglich eine Durchflusslinie. Die Verbindungseinheit 60 weist lediglich zwei Kanalöffnungen auf. Der Fluidkanal 68 ist zumindest innerhalb der Verbindungseinheit 60 unverzweigt. Der Fluidkanal 68 ist dazu vorgesehen, das Fluid von der Fluidanschlusseinheit 22 zu der Fluidausgabeeinheit 46 zu leiten. Die Verbindungseinheit 60 weist zumindest einen weiteren Fluidkanal 70 zu einem Fluiddurchfluss auf. Der Fluidführung in dem weiteren Fluidkanal 70 ist zumindest im Wesentlichen gemäß einer Fluidführung in dem Fluidkanal 68.

Die Verbindungseinheit 60 weist zumindest einen Verbindungsblock 62 auf. Der Verbindungsblock 62 ist zu einer fluidtechnischen Verbindung der Fluidanschlusseinheit 22 und dem Wischblattadapter 42 vorgesehen ist. Der Verbindungsblock 62 weist zumindest teilweise den Fluidkanal 68 auf. Der Verbindungsblock 62 weist zumindest teilweise den weiteren Fluidkanal 70 auf. Der Verbindungsblock 62 ist zumindest im Wesentlichen einteilig ausgebildet. Der Verbindungsblock 62 ist zumindest im Wesentlichen polyederförmig ausgebildet. Ein Körper des Verbindungsblocks 62 wird im Wesentlichen lediglich von Flächen begrenzt. Der Verbindungsblock 62 ist zumindest im Wesentlichen quaderförmig ausgebildet. Ein Winkel zwischen der Haupterstreckungsgeraden des Verbindungsblocks 62 und einer Haupterstreckungsebene des Wischblattadapters 42 bleibt zumindest bei einer Bewegung des Wischblatts 40 zumindest im Wesentlichen konstant. Der Winkel zwischen der Haupterstreckungsebene des Verbindungsblocks 62 und der Haupterstreckungsebene des Wischarms 20 ist bei einer Bewegung des Wischblatts 40 zumindest im Wesentlichen parallel. Der Verbindungsblock 62 bewegt sich bei einer Bewegung des Wischarms 20 zumindest im Wesentlichen synchron mit. Zumindest eine Fläche des Verbindungsblocks 62 ist bei einer Bewegung des Wischblatts 40 zumindest im Wesentlichen vollständig in Kontakt mit einer Fläche des Wischblattadapters 42.

Der Verbindungsblock 62 ist zu einer festen Steckverbindung mit einem Steckventil 44 des Wischblattadapters 42 vorgesehen. Der Verbindungsblock 62 ist zu einer fluiddichten Steckverbindung mit dem Steckventil 44 des Wischblattadapters 42 vorgesehen. Der Verbindungsblock 62 weist zumindest eine Ausnehmung 74 auf. Die Ausnehmung 74 ist zu der Steckverbindung mit dem Steckventil 44 des Wischblattadapters 42 vorgesehen. Eine Erstreckungsgerade der Ausnehmung 74 des Verbindungsblocks 62 ist zumindest im Wesentlichen parallel zu einer Durchflussrichtung innerhalb des Steckventils 44. Das Steckventil 44 des Wischblattadapters 42 bildet zumindest teilweise die Fluidausgabeeinheit 46. Die Ausnehmung 74 ist einteilig mit dem Fluidkanal 68 der Verbindungseinheit 60 verbunden. Die Ausnehmung 74 bildet eine Querschnittserweiterung des Fluidkanals 68. Das Steckventil 44 des Wischblattadapters 42 ist zumindest im Wesentlichen zylinderförmig. Die Ausnehmung 74 ist zumindest im Wesentlichen zylinderförmig. Bei einer Steckverbindung umschließt die Ausnehmung 74 fluiddicht das Steckventil 44 des Wischblattadapters 42. Der Verbindungsblock 62 weist zumindest eine weitere Ausnehmung 74 auf, die zu einer Steckverbindung mit einem weiteren Steckventil 44 des Wischblattadapters 42 vorgesehen ist. Die weitere Ausnehmung 74 ist einteilig mit dem weiteren Fluidkanal 70 der Verbindungseinheit 60 verbunden. Die weitere Ausnehmung 74 bildet eine Querschnittserweiterung des weiteren Fluidkanals 70.

Die Verbindungseinheit 60 weist zumindest ein schlauchförmiges Leitungselement 64 auf. Das Leitungselement 64 weist den Fluidkanal 68 zumindest teilweise auf. Das Leitungselement 64 ist zu einer fluidtechnischen Verbindung mit der Fluidanschlusseinheit 22 vorgesehen. Die Form des Leitungselement 64s entspricht zumindest im Wesentlichen der Form des Fluidkanals 68. Das Leitungselement 64 ist zumindest im Wesentlichen zylinderförmig. Das Leitungselement 64 bildet lediglich eine Wandung für den Fluidkanal 68. Die Fluidanschlusseinheit 22 weist zu einer Steckverbindung mit dem Leitungselement 64 zumindest ein Steckventil 24 auf. Das Steckventil 24 der Fluidanschlusseinheit 22 weist zumindest einen Wiederhaken zu einer festen und fluiddichten Steckverbindung auf. Das Leitungselement 64 ist zumindest teilweise rotationsschlaff und/oder biegeschlaff. Das Leitungselement 64 und der Verbindungsblock 62 sind einteilig miteinander verbunden. Das Leitungselement 64 und der Verbindungsblock 62 bestehen zumindest im Wesentlichen aus einem Teil. Die Verbindungseinheit 60 weist zumindest ein weiteres Leitungselement 66 auf. Das Leitungselement 64 ist zumindest im Wesentlichen baugleich zu dem weiteren Leitungselement 66. Das weitere Leitungselement 66 weist den weiteren Fluidkanal 70 zumindest teilweise auf. Das weitere Leitungselement 66 ist zu einer fluidtechnischen Verbindung mit der Fluidanschlusseinheit 22 vorgesehen. Das weitere Leitungselement 66 ist einteilig mit dem Verbindungsblock 62 verbunden. Die Fluidanschlusseinheit 22 weist zu einer Steckverbindung mit dem weiteren Leitungselement 66 zumindest ein weiteres Steckventil 24 auf.

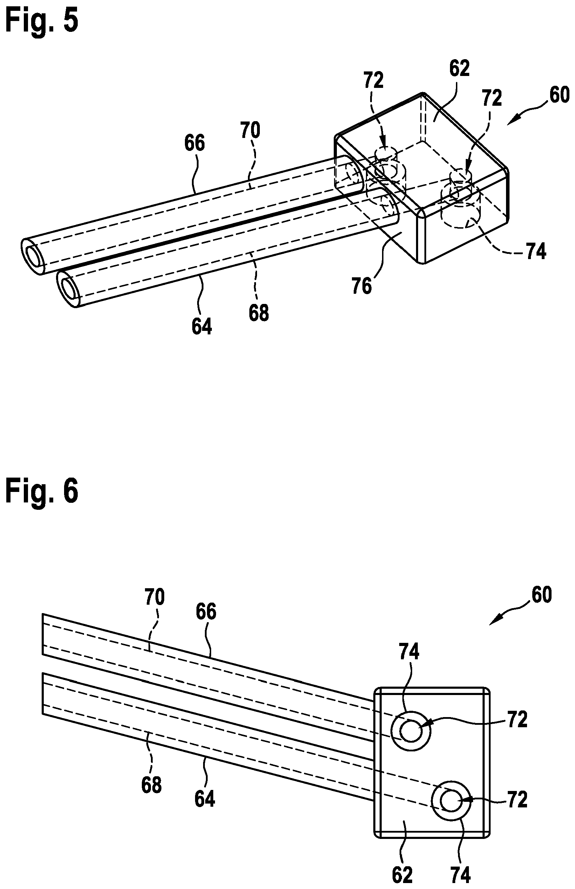

Die Figur 5 und die Figur 6 zeigen die Verbindungseinheit 60 mit dem Verbindungsblock 62 und mit dem Leitungselement 64 und dem weiteren Leitungselement 66. Das Leitungselement 64 und das weitere Leitungselement 66 sind an derselben Fläche mit dem Verbindungsblock 62 verbunden. Eine Verbindungsgerade, welche zumindest durch die Mittelpunkte eine Verbindungsfläche zwischen dem Verbindungsblock 62 mit dem Leitungselement 64 und dem weiteren Leitungselement 66 gebildet wird, ist zumindest im Wesentlichen parallel zu der Haupterstreckungsebene des Verbindungsblocks 62.

Die Ausnehmung 74 und die weitere Ausnehmung 74 sind innerhalb des Verbindungsblocks 62 versetzt angeordnet. Der Verbindungsblock 62 weist zumindest eine Anschlussfläche 76 auf, welche zumindest die Verbindungsfläche des Verbindungsblocks 62 mit dem Leitungselement 64 aufweist. Die Ausnehmung 74 und die weitere Ausnehmung 74 sind relativ zu der Anschlussfläche 76 des Verbindungsblocks 62 versetzt angeordnet. Eine Durchflusslänge des Fluidkanals 68 ist verschieden zu einer Durchflusslänge des weiteren Fluidkanals 70. Eine Verbindungsgerade, welche durch die Mittelpunkte der Ausnehmung 74 gebildet wird, ist schief zu einer Haupterstreckungsgeraden des Verbindungsblocks 62 angeordnet. Die Ausnehmung 74 weist innerhalb des Verbindungsblocks 62 eine unterschiedliche Entfernung der Anschlussfläche 76 des Verbindungsblocks 62 auf. Der Fluidkanal 68 und der weitere Fluidkanal 70 sind zumindest im Wesentlichen parallel. Das Leitungselement 64 und das weitere Leitungselement 66 sind zumindest im Wesentlichen parallel. Der Fluidkanal 68 ist schief zu der Anschlussfläche 76 des Verbindungsblocks 62. Das Leitungselement 64 ist schief zu einer Anschlussfläche 76 des Verbindungsblocks 62. Ein Winkel zwischen dem Leitungselement 64 und der Anschlussfläche 76 ist zumindest zwischen 10° und 45°. Ein Winkel zwischen dem Fluidkanal 68 und der Anschlussfläche 76 ist zumindest zwischen 10° und 45°.

Die Verbindungseinheit 60 weist zumindest eine Richtungsabweichung 72. Die Richtungsabweichung 72 lenkt das Fluid um. Der Fluidkanal 68 weist die Richtungsabweichung 72 auf. Der Fluidkanal 68 weist innerhalb des Verbindungsblocks 62 die Richtungsabweichung 72 auf. Die Richtungsabweichung 72 weist zumindest eine Winkeländerung relativ zu der Haupterstreckungsebene des Verbindungsblocks 62 auf. Die Richtungsabweisung weist zumindest eine Winkeländerung von zumindest im Wesentlichen 90° auf. Der Fluidkanal 68 ist entlang der Richtungsabweichung 72, innerhalb des Verbindungsblocks 62 als Ecke ausgebildet. Alternativ ist die Richtungsabweichung 72, innerhalb des Verbindungsblocks 62 als eine Krümmung ausgebildet. Der Fluidkanal 68 weist zumindest zwei Durchflussgeraden auf, welche zumindest im Wesentlichen durch die Mittelpunkte des Fluidkanals 68 gebildet werden. Die Durchflussgeraden des Fluidkanals 68 schneiden sich in der Richtungsabweichung 72 im Verbindungsblock 62. Die Durchflussgeraden des Fluidkanals 68 sind zumindest im Wesentlichen senkrecht zueinander. Der Fluidkanal 68 ist in der Verbindungseinheit 60 zumindest im Wesentlichen L-förmig. Der weitere Fluidkanal 68 weist eine weitere Richtungsabweichung 72 zumindest im Wesentlichen gemäß der Richtungsabweichung 72 des Fluidkanals 68.

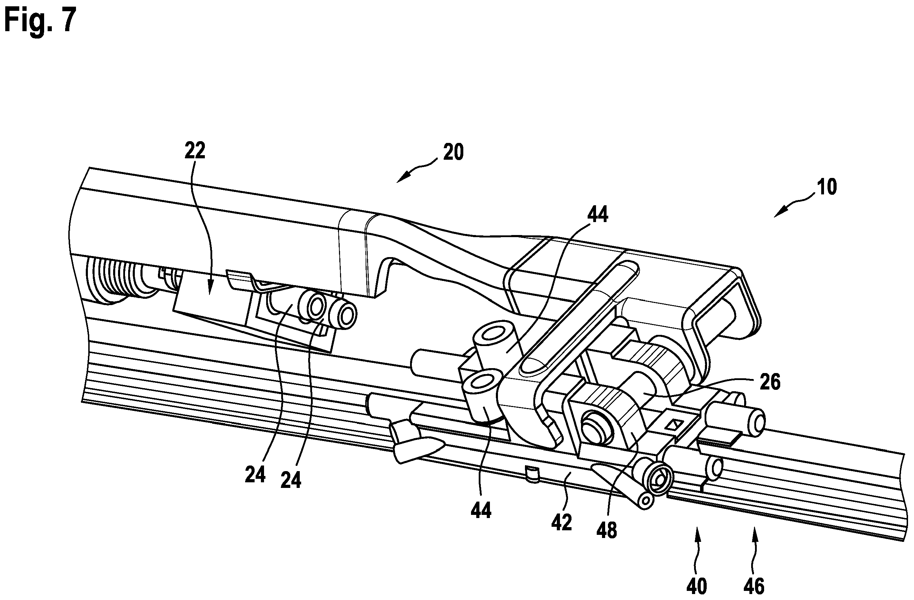

Die Figur 7 zeigt einen Teil des Scheibenwischers 10 mit dem Wischarm 20 und dem Wischblatt 40 in einem demontierten Zustand. Zu einer Demontage und/oder Montage des Scheibenwischers 10 wird ein Verfahren vorgeschlagen. Insbesondere wird ein Verfahren zu einem Wechsel des Wischblatts 40 vorgeschlagen. In zumindest einem ersten Verfahrensschritt wird eine fluidtechnische Verbindung gelöst. In dem ersten Verfahrensschritt wird zumindest eine Steckverbindung zwischen dem Steckventil 44 des Wischblattadapters 42 und der Ausnehmung 74 des Verbindungsblocks 62 gelöst. Die Steckverbindung zwischen dem Steckventil 44 des Wischblattadapters 42 und der Ausnehmung 74 des Verbindungsblocks 62 wird mit der Hand gelöst. In dem ersten Verfahrensschritt wird zumindest eine Steckverbindung zwischen dem Leitungselement 64 und dem Steckventil 24 der Fluidanschlusseinheit 22 gelöst. In dem ersten Verfahrensschritt wird zumindest eine Steckverbindung zwischen dem weiteren Leitungselement 66 und dem weiteren Steckventil 24 der Fluidanschlusseinheit 22 gelöst. In dem ersten Verfahrensschritt wird die Verbindungseinheit 60 entfernt. In dem ersten Verfahrensschritt wird eine fluidtechnische Verbindung zwischen dem Wischarm 20 und dem Wischblatt 40 unterbrochen. In zumindest einem zweiten Verfahrensschritt wird zumindest die krafttechnische Verbindung zwischen dem Wischblattadapter 42 und dem Wischarm 20 gelöst. In dem zweiten Verfahrensschritt wird zumindest das Kopplungselement 48 des Wischblattadapters 42 von dem korrespondierenden Kopplungselement 26 des Wischarms 20 entfernt. In einem dritten Verfahrensschritt wird ein weiteres Wischblatt mit dem Wischarm 20 krafttechnisch verbunden. In einem vierten Verfahrensschritt wird die Verbindungseinheit 60 mit dem Wischarm 20 und mit einem weiteren Wischblattadapter des weiteren Wischblatts verbunden.

## Patentansprüche

1. Scheibenwischer (10) mit zumindest einem Wischarm (20), welcher zumindest eine Fluidanschlusseinheit (22) aufweist, und mit einem Wischblatt (40), welches zumindest einen Wischblattadapter (42)zu einer Kopplung mit dem Wischarm (20) aufweist und welches entfernbar ausgestaltet ist, und mit zumindest einer Verbindungseinheit (60), welche zumindest einen Fluidkanal (68) zu einem Fluiddurchfluss aufweist, wobei die Verbindungseinheit (60) zumindest einen Verbindungsblock (62), der zu einer fluidtechnischen Verbindung der Fluidanschlusseinheit (22) und dem Wischblattadapter (42) vorgesehen ist, und zumindest ein schlauchförmiges Leitungselement (64), das den Fluidkanal (68) zumindest teilweise aufweist und welches zu einer fluidtechnischen Verbindung mit der Fluidanschlusseinheit (22) vorgesehen ist, aufweist, wobei der Fluidkanal innerhalb des Verbindungsblocks (62) eine Richtungsabweichung (72) aufweist, und wobei der Verbindungsblock (62) und das schlauchförmige Leitungselement aus einem elastischen Material ausgebildet sind, wobei der Verbindungsblock (62) zu einer festen und/oder fluiddichten Steckverbindung mit einem Steckventil (44) des Wischblattadapters (42) vorgesehen ist, **dadurch gekennzeichnet, dass** der Verbindungsblock (62) zumindest eine Ausnehmung (74) aufweist, die zu der Steckverbindung mit dem Steckventil (44)I des Wischblattadapters (42) vorgesehen ist und eine weitere Ausnehmung (74) aufweist, die zu einer Steckverbindung mit einem weiteren Steckventil (44) des Wischblattadapters vorgesehen ist und die Ausnehmung (74) und die weitere Ausnehmung (74) innerhalb des Verbindungsblocks (62) versetzt angeordnet sind.

2. Scheibenwischer (10) nach Anspruch 1, **dadurch gekennzeichnet, dass** der Verbindungsblock (62) zumindest im Wesentlichen polyederförmig ausgebildet ist.

3. Scheibenwischer (10) nach einem der vorhergehenden Ansprüche, **dadurch gekennzeichnet, dass** ein Winkel zwischen der Haupterstreckungsgeraden des Verbindungsblocks (62) und einer Haupterstreckungsebene des Wischblattadapters (42) zumindest bei einer Bewegung des Wischblatts (40) zumindest im Wesentlichen konstant bleibt.

4. Scheibenwischer (10) nach einem der vorhergehenden Ansprüche, **dadurch gekennzeichnet, dass** der Verbindungsblock (62) zumindest im Wesentlichen einteilig ausgebildet ist.

5. Scheibenwischer (10) nach einem der vorhergehenden Ansprüche, **dadurch gekennzeichnet, dass** die Verbindungseinheit 60 (60) zumindest teilweise rotationsschlaff und/oder biegeschlaff ist.

6. Scheibenwischer (10) nach einem der vorhergehenden Ansprüche, **dadurch gekennzeichnet, dass** die Verbindungseinheit (60) zumindest einen weiteren Fluidkanal (70) zu einem Fluiddurchfluss aufweist.

7. Scheibenwischer (10) nach Anspruch 6, **dadurch gekennzeichnet, dass** die Verbindungseinheit (60) zumindest ein weiteres Leitungselement (66) aufweist, das den weiteren Fluidkanal (70) zumindest teilweise aufweist und welches zu einer fluidtechnischen Verbindung mit der Fluidanschlusseinheit (22) vorgesehen ist.

8. Scheibenwischer (10) nach Anspruch 7, **dadurch gekennzeichnet, dass** der Verbindungsblock (62) zumindest teilweise den weiteren Fluidkanal (70) aufweist.

## Claims

1. Windscreen wiper (10) having at least one wiper arm (20), which has at least one fluid connection unit (22), and having a wiper blade (40), which has at least one wiper blade adapter (42) for coupling to the wiper arm (20) and which is designed to be removable, and having at least one connecting unit (60), which has at least one fluid channel (68) for passage of a fluid, wherein the connecting unit (60) has at least one connecting block (62), which is provided for a fluidic connection of the fluid connection unit (22) and the wiper blade adapter (42), and at least one tubular conduit element (64), which at least partially has the fluid channel (68) and which is provided for a fluidic connection to the fluid connection unit (22), wherein the fluid channel has a direction deviation (72) within the connecting block (62), and wherein the connecting block (62) and the tubular conduit element are formed from an elastic material, wherein the connecting block (62) is provided for a fixed and/or fluid-tight plug-in connection to a plug-in valve (44) of the wiper blade adapter (42), **characterized in that** the connecting block (62) has at least one recess (74), which is provided for the plug-in connection to the plug-in valve (44) of the wiper blade adapter (42), and has a further recess (74), which is provided for a plug-in connection to a further plug-in valve (44) of the wiper blade adapter, and the recess (74) and the further recess (74) are offset within the connecting block (62).

2. Windscreen wiper (10) according to Claim 1, **characterized in that** the connecting block (62) is at least substantially in the shape of a polyhedron.

3. Windscreen wiper (10) according to either of the preceding claims, **characterized in that** an angle between the main straight line of extent of the connecting block (62) and a main plane of extent of the wiper blade adapter (42) remains at least substantially constant at least during a movement of the wiper blade (40).

4. Windscreen wiper (10) according to one of the preceding claims, **characterized in that** the connecting block (62) is at least substantially in one piece.

5. Windscreen wiper (10) according to any one of the preceding claims, **characterized in that** the connecting unit 60 (60) is at least partially rotatable and/or pliable.

6. Windscreen wiper (10) according to any one of the preceding claims, **characterized in that** the connecting unit (60) has at least one further fluid channel (70) for passage of a fluid.

7. Windscreen wiper (10) according to Claim 6, **characterized in that** the connecting unit (60) has at least one further line element (66), which at least partially has the further fluid channel (70) and which is provided for a fluidic connection to the fluid connection unit (22).

8. Windscreen wiper (10) according to Claim 7, **characterized in that** the connecting block (62) at least partially has the further fluid channel (70).

## Revendications

1. Essuie-glace (10) comprenant au moins un bras d'essuie-glace (20) qui comprend au moins une unité (22) de raccordement de fluide, et comprenant un balai d'essuie-glace (40) qui comprend au moins un adaptateur (42) de balai d'essuie-glace pour une liaison au bras d'essuie-glace (20) et qui est conçu de manière amovible, et comprenant au moins une unité de connexion (60) qui comprend au moins un canal de fluide (68) pour un écoulement de fluide, l'unité de connexion (60) comprenant au moins un bloc de connexion (62) qui est prévu pour une connexion fluidique de l'unité (22) de raccordement de fluide et de l'adaptateur (42) de balai d'essuie-glace, et au moins un élément de conduite tubulaire (64) qui comprend au moins partiellement le canal de fluide (68) et qui est prévu pour une connexion fluidique à l'unité (22) de raccordement de fluide, le canal de fluide présentant à l'intérieur du bloc de connexion (62) une déviation de direction (72), et le bloc de connexion (62) et l'élément de conduite tubulaire étant réalisés en un matériau élastique, le bloc de connexion (62) étant prévu pour une connexion enfichable fixe et/ou étanche aux fluides à une vanne enfichable (44) de l'adaptateur (42) de balai d'essuie-glace, **caractérisé en ce que** le bloc de connexion (62) comprend au moins un évidement (74) qui est prévu pour la connexion enfichable avec la vanne enfichable (44) de l'adaptateur (42) de balai d'essuie-glace et qui comprend un autre évidement (74) qui est prévu pour une connexion enfichable avec une autre vanne enfichable (44) de l'adaptateur de balai d'essuie-glace, et l'évidement (74) et l'autre évidement (74) sont agencés de manière décalée à l'intérieur du bloc de connexion (62).

2. Essuie-glace (10) selon la revendication 1, **caractérisé en ce que** le bloc de connexion (62) est réalisé au moins essentiellement sous forme polyédrique.

3. Essuie-glace (10) selon l'une des revendications précédentes, **caractérisé en ce qu'**un angle entre la droite principale du bloc de liaison (62) et un plan d'extension principal de l'adaptateur (42) de balai d'essuie-glace reste au moins sensiblement constant, au moins lors d'un mouvement du balai d'essuie-glace (40).

4. Essuie-glace (10) selon l'une des revendications précédentes, **caractérisé en ce que** le bloc de liaison (62) est réalisé au moins essentiellement en une seule pièce.

5. Essuie-glace (10) selon l'une des revendications précédentes, **caractérisé en ce que** l'unité de liaison (60) est au moins partiellement flexible en rotation et/ou souple en flexion.

6. Essuie-glace (10) selon l'une des revendications précédentes, **caractérisé en ce que** l'unité de connexion (60) comprend au moins un autre canal de fluide (70) pour un écoulement de fluide.

7. Essuie-glace (10) selon la revendication 6, **caractérisé en ce que** l'unité de connexion (60) comprend au moins un autre élément de conduite (66) qui comprend au moins partiellement ledit autre canal de fluide (70) et qui est prévu pour une connexion fluidique avec l'unité (22) de raccordement de fluide.

8. Essuie-glace (10) selon la revendication 7, **caractérisé en ce que** le bloc de connexion (62) comprend au moins partiellement ledit autre canal de fluide (70).
